# EUROPÄISCHE PATENTSCHRIFT

(11) **EP 0 383 144 B1**
(45) Veröffentlichungstag und Bekanntmachung des Hinweises auf die Patenterteilung: **07.01.1993**
(21) Anmeldenummer: 90102259.0
(22) Anmeldetag: 06.02.1990
(51) Int. Cl.: B60K 17/344

(54) **Antriebsvorrichtung für mindestens zwei Radpaare**
Driving device for at least two pairs of wheels
Mécanisme de commande pour au moins deux paires de roues

(30) Priorität: 15.02.1989 DE 3904493
(43) Veröffentlichungstag der Anmeldung: 22.08.1990
(73) Patentinhaber: DEERE & COMPANY, Moline, Illinois 61265 (US)
(72) Erfinder: Magin, Ludwig, D-6707 Schifferstadt (DE)
(74) Vertreter: Feldmann, Bernhard

(56) Entgegenhaltungen:
- EP-A- 0 243 865
- AT-B- 383 315
- DE-C- 3 516 982
- FR-A- 2 585 300
- GB-A- 2 159 110

## Beschreibung

Die Erfindung betrifft eine Antriebsvorrichtung für mindestens zwei Radpaare, mit einem Getriebe, mit Antriebswellen zwischen diesem und den Radpaaren und mit einem variablen Zugmittelgetriebe zum Verändern der relativen Drehzahl zwischen beiden Antriebswellen.

Eine bekannte Antriebsvorrichtung dieser Art (EP-B1-0 162 021) enthält ein als Planetengetriebe ausgebildetes Verteilergetriebe, dessen Ringrad mit der Antriebswelle für das eine Radpaar und dessen Sonnenrad mit einer Eingangswelle eines Drehzahlwechselgetriebes verbunden ist, das zu der Antriebswelle für das zweite Radpaar führt. Mittels des Drehzahlwechselgetriebes soll eine Anpassung der den jeweiligen Radpaaren zugeführten Drehmomente an die Radlasten und die Fahrbahnhaftung erzielt werden. Eine weitere Antriebsvorrichtung mit einem als Planetengetriebe ausgebildeten Zwischendifferential und einem Zugmittelgetriebe ist in der DE-OS-35 33 143 offenbart.

Derartige Antriebssysteme sind insofern nachteilig, als infolge des Verteilergetriebes nach wie vor die Möglichkeit besteht, daß bei stark ungleichen Bodenhaftungsverhältnissen das gesamte Drehmoment den Rädern zugeführt wird, die durchrutschen. Zudem verursacht das Verteilergetriebe mit dem Drehzahlwechselgetriebe einen hohen baulichen Aufwand mit entsprechenden Kosten.

Die der Erfindung zugrundeliegende Aufgabe wird darin gesehen, eine Antriebsvorrichtung zu entwickeln, die mit geringem Aufwand verhindert, dar ein oder mehrere Räder bei geringer Bodenhaftung durchdrehen, wobei aber dennoch eine Verspannung im Antriebsstrang bei Kurvenfahrt vermieden werden soll.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise kann die Eingangsgeschwindigkeit der einen Antriebswelle konstant gehalten werden, während die der anderen Antriebswelle entsprechend dem sich bei Kurvenfahrt vergrößernden mittleren Abrollradius erhöht wird. Die starre Verbindung - also ohne das aus dem Stand der Technik bekannte Verteilergetriebe - sorgt dafür, daß alle Räder immer mit der ihnen zugedachten Geschwindigkeit umlaufen - unabhängig davon, welche Bodenhaftung gegeben ist.

Es ist zwar aus der EP-A1-0 262 626 bereits eine Antriebsvorrichtung für zwei Radpaare bekannt geworden, bei der die Drehzahl eines vorderen Radpaares in Abhängigkeit von der Größe des Lenkwinkels geregelt wird; dort wird die überflüssige Bewegungsenergie jedoch in einer Rutschkupplung vernichtet, so daß entsprechend viel Reibungsenergie abgeführt werden muß.

Es gibt Einsatzverhältnisse, in denen insbesondere bei Ackerschleppern ein Allradantrieb entweder nicht erforderlich, oder nicht erwünscht ist, z. B. bei der Fahrt mit höherer Geschwindigkeit auf Straßen oder bei leichten Pflegearbeiten. Somit ist es von Nutzen und es führt zu einer Energieersparnis, wenn eines der Radpaare nur wahlweise anstatt stets antreibbar ist. Auf einfache Weise wird dies durch die Trennung des Zugmittelgetriebes von dem stets gegebenen Antrieb für das hauptsächliche Radpaar erreicht.

Die Abhängigkeit des Drehzahlverhältnisses zwischen den Antriebswellen von der Größe des Lenkwinkels anstatt z. B. von den anliegenden Drehmomenten gewährleistet, daß zumindest die mittlere Geschwindigkeit jedes Radpaares der sich aufgrund der sich ändernden Abrollradien während der Kurvenfahrt theoretisch ergebenden Geschwindigkeit entspricht.

Das Vorhandensein eines Korrekturkreises läßt einen Ausgleich sich im Laufe der Zeit infolge Abnutzungen einstellender Raddurchmesseränderungen zu. Zudem ist es möglich, auch bei Kurvenfahrt einen sich stets anpassenden geringen Vorlauf zu erzeugen, der das Fahrzeug etwas in die Kurve hineinzieht.

Soll nicht nur die mittlere Geschwindigkeit während der Kurvenfahrt der theoretischen Geschwindigkeit entsprechen, sondern auch jedes einzelne Rad des den größeren Abrollkreis beschreibenden Radpaares, dann kann dies dadurch erreicht werden, daß jedes Rad mit der für es erforderlichen Geschwindigkeit angetrieben wird. Aus der DE-OS-34 16 483 ist es zwar bereits bekannt, alle vier Räder eines Kraftfahrzeuges mit unterschiedlichen Geschwindigkeiten anzutreiben; dort sind jedoch die Geschwindigkeiten der sich diagonal gegenüberliegenden Räder aufeinander abgestimmt, und es sind zwei Differentiale vorgesehen, die wiederum einen Einfluß des an den jeweiligen Rädern anstehenden Drehmoments zulassen.

Bei der Verwendung eines Kettengetriebes anstatt eines Riemengetriebes kann eine hohe Antriebsleistung übertragen werden, es tritt eine übermäßige Dehnung in dem Zugmittel nicht ein, da eine Kette nur geringen Längendehnungen unterworfen ist, und die Kette kann in einem Ölbad umlaufen, so daß sowohl eine Kühlung, als auch eine Schmierung gegeben ist.

Der zusätzliche, d.h. überlagerte, Einfluß der Drehzahländerung zwischen den Radpaaren während der Kurvenfahrt auf die Drehzahländerung zwischen den Rädern eines Radpaares sorgt dafür, daß nur eine geringe Drehzahländerung zwischen den Wellen für die jeweiligen Räder und somit ein geringer Regelaufwand eintritt.

Die Verwendung einer gemeinsamen Regelscheibe für die beiden Teilgetriebe, und zwar die mittlere, gewährleistet an sich schon eine direkte Abhängigkeit der Drehzahlen der beiden Räder eines Radpaares voneinander, da sich beim Verschieben dieser Regelscheibe die Drehzahl des einen Rades erhöht, während sich im gleichen Maß die Drehzahl des anderen Rades verringert.

Die Möglichkeit, die Spannung des Zugmittels zu verändern, kann zweifach genutzt werden. Einmal kann dadurch das Zugmittelgetriebe gleichzeitig eine Überlastsicherung darstellen, wobei der Zeitpunkt, wann aus Sicherheitsgründen keine Antriebsleistung mehr übertragen wird, von der nunmehr veränderbaren Spannung des Zugmittels abhängt. Zweitens kann durch eine Veränderung der Spannung das Zugmittel auch weiter in die Regelscheibeneinheiten gezogen oder aus diesen herausgenommen werden, so daß sich auf diese Weise eine Drehzahländerung einstellt - Voraussetzung hierfür ist allerdings, daß eine der Regelscheibeneinheiten das Zugmittel federbelastet hält.

Die konzentrische Anordnung der Wellen für die getrennt angetriebenen Räder jeweils eines Radpaares führt zu einer großen Raumersparnis, die mit einem speziell ausgebildeten Umlenkgetriebe ohne Differential für das eine Radpaar einhergeht.

Das Resultat der erfindungsgemäßen Antriebsvorrichtung ist nach alledem insbesondere darin zu sehen, daß in keinem Fall ein separates Differential zwischen den Radpaaren benötigt wird. Darüberhinaus braucht auch kein Differential zwischen den Rädern des geregelt angetriebenen Radpaares vorgesehen werden, wenn die Räder mittels eigener Wellen getrennt angetrieben werden. Dadurch scheiden die nachteiligen Wirkungen von Differentialen ohne Differentialsperren bei unterschiedlichen Haftbedingungen aus.

In der Zeichnung ist ein nachfolgend näher beschriebenes Ausführungsbeispiel der Erfindung schematisch dargestellt. Es zeigt:
Fig. 1 eine Antriebsvorrichtung für ein wahlweise allradantreibbares Kraftfahrzeug mit einem Zugmittelgetriebe,
Fig. 2 die Antriebsvorrichtung aus Figur 1, bei der das Zugmittelgetriebe von dem Antrieb getrennt und von einem Stirnradgetriebe überbrückt werden kann,
Fig. 3 die Antriebsvorrichtung mit Mitteln zum separaten Antrieb von Rädern eines Radpaares,
Fig. 4 eine Spanneinrichtung für das Zugmittelgetriebe und
Fig. 5 das Zugmittelgetriebe mit einer geteilten mittleren Regelscheibe zum Drehzahlausgleich.

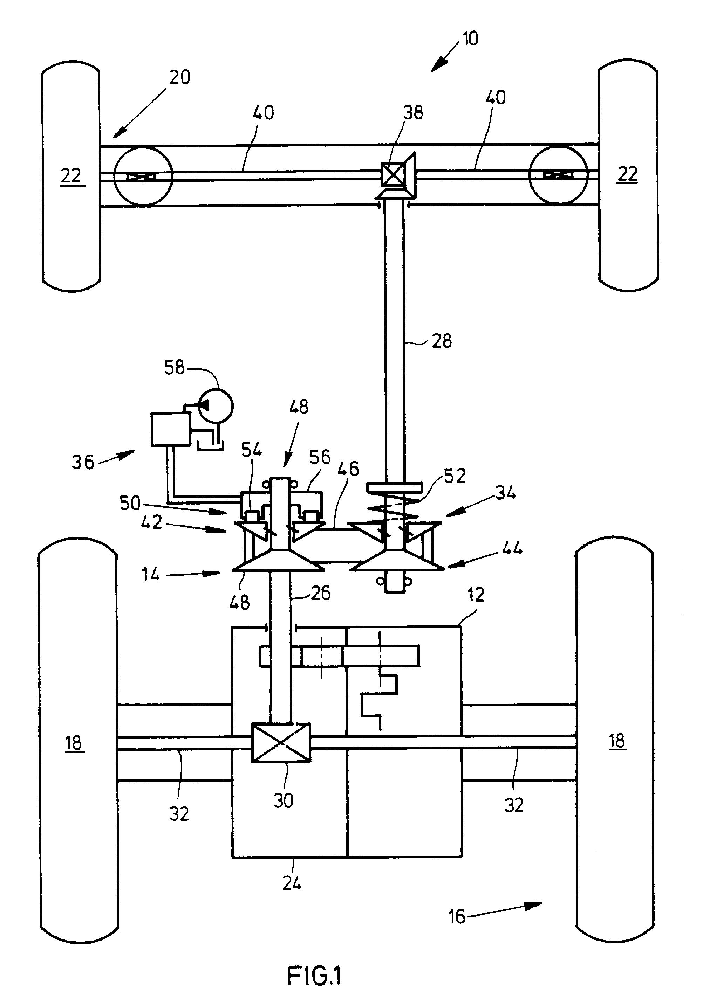

Von einem in Figur 1 dargestellten Kraftfahrzeug 10 in der Art eines Ackerschleppers sind im wesentlichen ein Motor 12, eine Antriebsvorrichtung 14, ein rückwärtiges Radpaar 16 mit Rädern 18 und ein vorderes Radpaar 20 mit Rädern 22 abgebildet.

Der Motor 12 ist herkömmlich als Verbrennungsmotor ausgebildet und befindet sich entweder direkt neben der Antriebsvorrichtung 14 oder ist mit dieser in nicht gezeigter Weise über eine Welle oder sonstige Antriebsübertragungsmittel verbunden.

Die Antriebsvorrichtung 14 enthält als wesentliche Komponenten ein Getriebe 24, eine erste und eine zweite Antriebswelle 26 und 28, ein rückwärtiges Differential 30 und rückwärtige Halbwellen 32, ein Zugmittelgetriebe 34, eine Regelvorrichtung 36, ein vorderes Differential 38 und vordere Halbwellen 40.

Die Räder 18 des rückwärtigen Radpaares 16 sind nicht lenkbar und beschreiben somit während einer Kurvenfahrt den kleineren Abrollkreis. Die rückwärtigen Räder 18 werden stets angetrieben, wenn das Getriebe 24 Antriebsleistung abgibt.

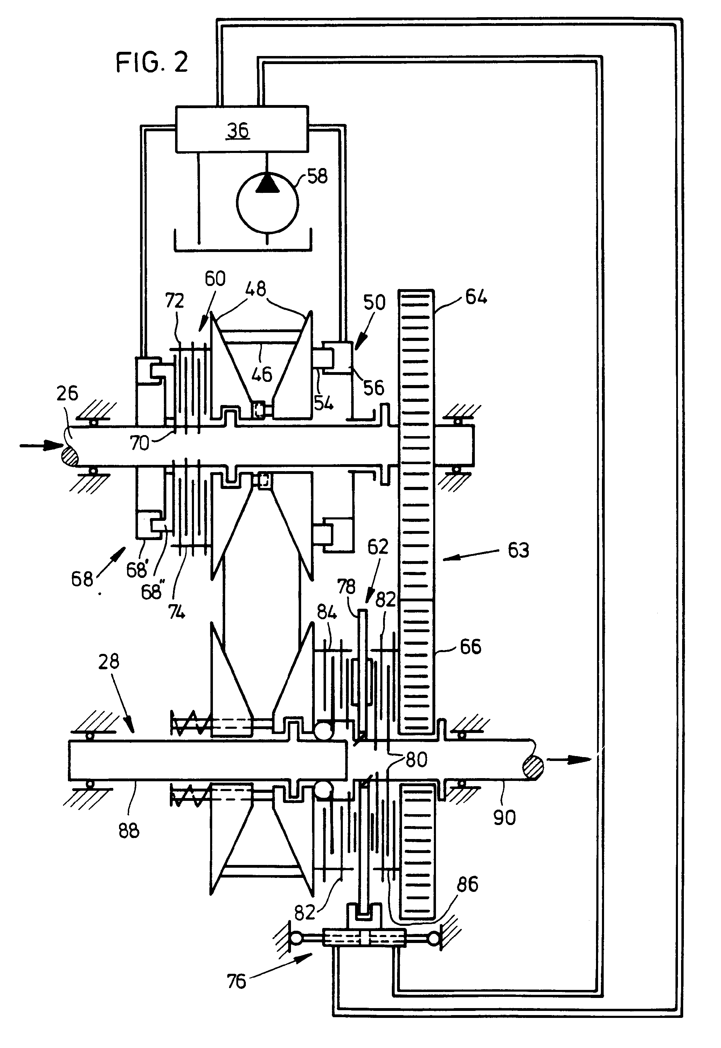

Die Räder 22 des vorderen Radpaars 20 sind lenkbar und beschreiben somit während einer Kurvenfahrt den größeren Abrollkreis. Die vorderen Räder 22 werden entweder ständig, oder, wenn das Zugmittelgetriebe 34, wie in Figur 2 abgebildet, ausgebildet ist, wahlweise angetrieben.

Das Getriebe 24 ist ein Geschwindigkeitswechselgetriebe und bildet aus einer von dem Motor 12 abgenommenen Eingangsdrehzahl unterschiedliche Ausgangsdrehzahlen, die den Antriebswellen 26, 28 aufgegeben werden. Zwischen dem Motor 12 und dem Getriebe 24 befindet sich eine nicht gezeigte Kupplung, die es ermöglicht, den Antrieb zu unterbrechen.

Die erste und rückwärtige Antriebswelle 26 steht in drehfester Verbindung zu dem Getriebe 24 und erstreckt sich auf der einen Seite zu dem rückwärtigen Differential 30 und auf der anderen Seite zu dem Zugmittelgetriebe 34. Die vordere Antriebswelle 28 erstreckt sich zwischen dem Zugmittelgetriebe 34 und dem vorderen Differential 38. Der Antrieb wird dann von den jeweiligen Differentialen 30 bzw. 38 über die dazugehörigen Halbwellen 32 bzw. 40 den rückwärtigen bzw. vorderen Rädern 18 bzw. 22 zugeleitet. Zwischen den Antriebswellen 26, 28 herrscht, sobald und solange das Zugmittelgetriebe 34 in Einsatz ist, eine drehfeste, wenn auch im Übersetzungsverhältnis variable Verbindung.

Das rückwärtige Differential 30 sorgt während der Kurvenfahrt für einen Drehzahlausgleich zwischen dem linken und dem rechten rückwärtigen Rad 18. Soll ein derartiger Drehzahlausgleich unterbleiben, z. B. wenn die Räder 18 auf einen Untergrund mit unterschiedlicher Griffigkeit geraten, ist an dem rückwärtigen Differential 30 eine nicht gezeigte Differentialsperre vorzusehen. Die Verbindung von dem rückwärtigen Differential 30 zu den rückwärtigen Rädern 18 erfolgt über die rückwärtigen Halbwellen 32.

In gleicher Weise wirkt auch das vordere Differential 38, das über die vorderen Halbwellen 40 auf die vorderen Räder 22 eine Antriebsleistung überträgt.

Das Zugmittelgetriebe 34 ist in der Ausführungsform nach Figur 1 mit einer Antriebseinheit 42 und einer Abtriebseinheit 44 versehen, die über ein Zugmittel 46 drehfest miteinander verbunden sind.

Die Antriebseinheit 42 ist auf die erste und rückwärtige Antriebswelle 26 aufgesetzt, mit dieser bei der Lösung nach Fig. 1 stets drehfest verbunden und enthält zwei an der Innenseite konisch verlaufende Regelscheiben 48, die mittels eines linearen Hydraulikmotors 50 axial gegeneinander verschiebbar sind. Die Steuerung des Hydraulikmotors 50 erfolgt mittels der Regelvorrichtung 36.

Die Abtriebseinheit 44 besteht ebenfalls aus zwei derartigen Regelscheiben 48, die allerdings unter der Wirkung einer Feder 52 stets aufeinander zubewegt werden und von denen mindestens eine drehfest mit der zweiten Antriebswelle 28 verbunden ist. Die Kraft der Feder 52 ist so ausgelegt, daß das Zugmittel 46 keinem, oder wenigstens einem geringstmöglichen Schlupf gegenüber den Regelscheiben 48 unterliegt.

Das Zugmittel 46 ist bei einem derartigen Anwendungsfall vorzugsweise als Kette ausgebildet, da mit dieser hohe Leistungen übertragen werden können und sie zu Kühl- und Schmierzwecken durch ein Ölbad geführt werden kann. Es ist prinzipiell aber auch möglich, anstatt der Kette einen Riemen zu verwenden. Im übrigen ist das Zugmittel 46 herkömmlich ausgebildet.

Der Hydraulikmotor 50 ist in diesem Ausführungsbeispiel mit der ersten Antriebswelle 26 und mit einer der Regelscheiben 50 drehfest verbunden und besteht aus einem Kolben 54 und einem Zylinder 56. Der Kolben 54 wirkt direkt auf die gegenüber der ersten Antriebswelle 26 axial bewegliche Regelscheibe 48 und ist so in der Lage, den axialen Abstand zwischen den beiden Regelscheiben 50 und somit den radialen Abstand des Zugmittels 46 zu der ersten Antriebswelle 26 zu ändern.

Die Feder 52 wirkt in vergleichbarer Weise wie der Hydraulikmotor 50 - allerdings nur als Reaktionsglied, d.h., sie bewegt eine der beiden Regelscheiben 50 der Abtriebseinheit 44 in Abhängigkeit und als Reaktion von der Stellbewegung des Hydraulikmotors 50.

Die Funktion des Zugmittelgetriebes 34 entspricht insoweit der bekannter Zugmittelgetriebe. D.h., sobald ausgehend von einem Signal der Regelvorrichtung 36 dem Zylinder 56 Drucköl zugeführt wird, drückt der Kolben 54 die beiden Regelscheiben 50 der Antriebseinheit 42 zusammen und bewegt somit das Zugmittel 46 radial nach außen. Gleichzeitig zieht sich das Zugmittel 46 in den Spalt zwischen den beiden Regelscheiben 50 der Abtriebseinheit 44. Wird Drucköl aus dem Zylinder 56 abgeführt, entfernen sich die beiden Regelscheiben 50 der Antriebseinheit 42 aufgrund der Kraft der Feder 52 voneinander. Auf diese Weise entsteht zwischen den beiden Antriebswellen 26, 28 eine Übersetzung ins Schnelle oder ins Langsame.

Die Betätigung des Hydraulikmotors 50 erfolgt durch die Regelvorrichtung 36. Diese kann als einfacher Schaltkreis mit rein hydraulisch oder elektrisch wirkenden Schaltelementen ausgestattet sein, das von einer Pumpe 58 unter Druck gesetzte Hydrauliköl dem Hydraulikmotor 50 zuführen, oder es von diesem abführen. Angesichts der komplexen Regelvorgänge ist es jedoch von Vorteil, die Regelvorrichtung 36 mit einem nicht gezeigten, programmierbaren, elektronischen Kleinrechner auszustatten, der eine Vielzahl komplexer Rechenoperationen ausführen kann und in kürzester Zeit aus der Größe des an den vorderen Rädern 22 abgenommenen Lenkwinkels, evtl. aus dem Übersetzungsverhältnis in dem Getriebe 24, evtl. aus der Drehzahl des Motors 12 und evtl. aus separat einzugebenden Korrekturfaktoren für den Außendurchmesser der Räder 18, 22 ein Ausgangssignal an ein nicht gezeigtes elektromagnetisch zu betätigendes Proportionalventil abgibt, das einen Druckölfluß zwischen der Pumpe 58 und dem Hydraulikmotor 50 freigibt oder unterbindet. Die Menge und Auswahl der zur Bildung eines Ausgangssignals herangezogenen Parameter bestimmt sich nach den Anforderungen an die Regelgüte und kann unterschiedlich gehandhabt werden.

Die Funktion des in Figur 1 dargestellten Ausführungsbeispiels ist wie folgt, wobei davon ausgegangen wird, daß
a) die vorderen Räder 22 des Kraftfahrzeugs 10 in einer Stellung für Geradeausfahrt stehen,
b) sich die beweglichen Regelscheiben 50 der Antriebs- und Abtriebseinheit 42 und 44 in einer Stellung befinden, in der eine Übersetzungsänderung zum Schneller-Laufen-Lassen der vorderen Räder 22 möglich ist,
c) eine Kurve durchfahren werden soll, und
d) ein gegebenes relatives Umlaufverhältnis (Vorlauf, Gleichlauf, Nachlauf) zwischen den rückwärtigen und den vorderen Rädern 18 und 22 erhalten bleiben soll.

Sobald die vorderen Räder 22 für die Kurvenfahrt eingeschlagen werden, errechnet die Regelvorrichtung 36 die sich daraus ergebende Abweichung des von den vorderen Rädern 22 durchfahrenen Wendekreises gegenüber dem von den rückwärtigen Rädern 18 durchfahrenen und bildet daraus ein Regelsignal, das an das Proportionalventil gegeben wird. Dieses wird geöffnet und Drucköl aus dem Hydraulikmotor 50 entweicht, so daß die beiden Regelscheiben 48 der Antriebseinheit 42 aufgrund der Kraft der Feder 52 aufeinander zubewegt werden und sich das Zugmittel 46 radial nach außen schiebt. Gleichzeitig schließt sich die Abtriebseinheit 44, so daß sich das Zugmittel 46 radial nach innen bewegt. Nach alledem ergibt sich eine Übersetzung ins Schnelle, so daß die dann bestehenden Umlaufgeschwindigkeiten an den rückwärtigen und den vorderen Rädern 18, 22 zu den zu durchfahrenden Wendekreisen passen - eine Verspannung in dem Antriebsstrang tritt demnach nicht auf. Sobald die vorderen Räder 22 wieder auf Geradeausfahrt eingestellt werden, erfolgt wieder eine Übersetzung ins Langsame; d. h., es erfolgt eine stete Anpassung der Umlaufgeschwindigkeiten an die Größe des Wendekreises. Da im Gegensatz zu einer weiteren Ausgestaltung des Ausführungsbeispiels ein Differential in dem Antrieb der vorderen Räder 22 vorhanden ist, entspricht die der zweiten Antriebswelle 28 aufgegebene Geschwindigkeit der Umlaufgeschwindigkeit des Differentials 38 und somit der mittleren Geschwindigkeit der beiden vorderen Räder 22.

In einer Abwandlung der vorbeschriebenen Ausführungsform kann zwischen der Antriebseinheit 42 und der ersten Antriebswelle 26 eine nicht gezeigte, vorzugsweise lastschaltbare Kupplung vorgesehen werden, mit deren Hilfe die Antriebseinheit 42 entweder mit der ersten Antriebswelle 26 verbunden, oder von dieser getrennt wird. Auf diese Weise kann ein Allrad- oder ein Zweiradantrieb realisiert werden.

Das Ausführungsbeispiel gemäß Figur 2 entspricht im wesentlichen dem der Figur 1, wobei allerdings zwei Kupplungen 60 und 62 vorgesehen sind, die das Zugmittelgetriebe 34 von den beiden Antriebswellen 26, 28 abkuppeln und diese anstatt dessen über ein Stirnradgetriebe 63 miteinander in Antriebsverbindung bringen.

Bezüglich der Ausführungen zu dem Zugmittelgetriebe 34 kann auf das Vorstehende verwiesen werden, und die Bezugszeichen sind unverändert übernommen.

In Figur 2 sind folgende Komponenten hinzugefügt worden: die erste lastschaltbare auf der Antriebsseite vorgesehene Kupplung 60, ein erstes Stirnrad 54, die zweite lastschaltbare auf der Abtriebsseite vorgesehene Kupplung 62 und ein zweites Stirnrad 66.

Die erste Kupplung 60 besteht aus einem Hydraulikmotor 68, einem Zylinder 68′, einem Kolben 68˝, Innenlamellen 70, Außenlamellen 72 und einem Käfig 74.

Der Hydraulikmotor 68 ist auf nicht gezeigte Weise drehfest mit der ersten Antriebswelle 26 verbunden und stützt sich an dieser axial ab. Zwischen dem Kolben 68˝ und der axial festen Regelscheibe 48 der Antriebseinheit 42 befinden sich abwechselnd die mit der ersten Antriebswelle 26 verzahnten Innenlamellen 70 und die mit dem Käfig 74 verzahnten Außenlamellen 72. Sobald in dem Zylinder 68′ ein Druck aufgebaut wird, preßt der Kolben 68˝ die Innen- und Außenlamellen 70, 72 aufeinander und stellt eine drehfeste Verbindung zwischen der Antriebseinheit 42 des Zugmittelgetriebes 34 und der ersten Antriebswelle 26 her. Im drucklosen Zustand kann die Antriebseinheit 42 tangential lose auf der ersten Antriebswelle 26 drehen.

Die zweite Kupplung 62 befindet sich zwischen der Abtriebseinheit 44 des Zugmittelgetriebes 34 und dem zweiten Stirnrad 66. Sie besitzt als wesentliche Bestandteile eine über einen Stellmotor 76 in zwei Richtungen bewegliche Anpreßplatte 78, der sich auf jeder Seite abwechselnd Innenund Außenlamellen 80 und 82 anschließen. An der axial festliegenden Regelscheibe 48 der Abtriebseinheit 44 ist ein Käfig 84 zur Aufnahme der sich in seinem Bereich befindlichen Außenlamellen 82 und an dem zweiten Stirnrad 66 ist ein Käfig 86 zur Verbindung mit den sich in seinem Bereich befindlichen Außenlamellen 82 vorgesehen.

Die zweite Antriebswelle 28 ist bei diesem Ausführungsbeispiel geteilt ausgebildet, und zwar in einen getriebeseitigen und einen kupplungsseitigen Abschnitt 88 und 90. Der getriebeseitige Abschnitt 88 ist drehfest mit dem Abtriebsteil 44 des Zugmittelgetriebes 34 und der kupplungsseitige Abschnitt 90 ist drehfest mit der Anpreßplatte 78 verbunden. Der getriebeseitige Abschnitt 88 ist in dem kupplungsseitigen Abschnitt 90 drehbar gelagert.

Die Innenlamellen 80 sind sämtlich mit dem kupplungsseitigen Abschnitt 90 der zweiten Antriebswelle 28 verzahnt und können abhängig von der Bewegung des Stellmotors 76 auf der Seite des Abtriebsteils 44 oder auf der Seite des zweiten Stirnrads 66 an die benachbarten Außenlamellen angepreßt werden.

Das erste Stirnrad 64 ist stets drehfest mit der ersten Antriebswelle 26 verbunden und ist an dem dem Getriebe 24 abgelegenen Endbereich der ersten Antriebswelle 26 hinter der Antriebseinheit 42 vorgesehen.

Das zweite Stirnrad 66 lagert tangential lose auf dem kupplungsseitigen Abschnitt 90 der zweiten Antriebswelle 28.

Infolge einer Bewegung der Anpreßplatte 78 mittels des Stellmotors 76 kann entweder die Abtriebseinheit 44 oder das zweite Stirnrad 66 mit dem kupplungsseitigen Abschnitt 90 der zweiten Antriebswelle 28 kraftschlüssig verbunden werden.

Der Hydraulikmotor 68, sein Zylinder 68′ und sein Kolben 68˝ sind entsprechend dem Hydraulikmotor 50 ausgebildet, so daß es diesbezüglich keiner besonderen Beschreibung bedarf.

Der Stellmotor 76 kann als eine in zwei Richtungen zwangsgeführte hydraulische Kolben-Zylindereinheit oder als Elektromotor ausgebildet sein, der die Anpreßplatte 78 tangential frei drehbar ergreift, sie aber axial verschieben kann. In Figur 2 ist gezeigt, daß sich hierzu die Anpreßplatte 76 radial bis über die Käfige 84, 86 erstreckt und dann von dem Stellmotor 76 ergriffen werden kann.

Die Steuerung des Hydraulikmotors 50, des Stellmotors 76 und des Hydraulikmotors 68 erfolgt analog dem Ausführungsbeispiel gemäß Figur 1 über die Regelvorrichtung 36. Die zusätzliche Funktion, die sich mit der Vorrichtung nach Figur 2 erreichen läßt, ist die, daß die Antriebskraft für die vorderen Räder 22 wahlweise über das Zugmittelgetriebe 34 oder über das Stirnradgetriebe 63 geleitet werden kann. Der damit erreichte Vorteil ist darin zu sehen, daß das Zugmittelgetriebe 34, das aufgrund dieser Bauart stets einem gewissen Verschleiß unterliegt, außer Betrieb sein kann, solange eine Änderung im Verhältnis der Antriebsgeschwindigkeit zwischen den vorderen und den rückwärtigen Rädern 22 und 18 nicht erforderlich ist, d.h. bei Geradeausfahrt, oder bei Kurvenfahrt mit einem sehr geringen Lenkwinkel.

Ein Antrieb über das Zugmittelgetriebe 34 erfolgt, wenn
a) die erste Kupplung 60 geschlossen ist und somit die erste Antriebswelle 26 mit der Antriebseinheit 42 verbindet und
b) die Anpreßplatte 78 mittels des Stellmotors 76 zu der Abtriebseinheit 44 gedrängt wird, so daß die Abtriebseinheit 44 mit dem zweiten Abschnitt 90 der zweiten Antriebswelle 28 in kraftschlüssiger Verbindung steht.

In diesem Antriebszustand werden die Innen- und die Außenlamellen 80, 82 zwischen der Anpreßplatte 78 und dem zweiten Stirnrad 66 nicht aneinander gepreßt und das zweite Stirnrad 66 dreht lose auf dem zweiten Abschnitt 90; eine Verspannung in der Antriebsvorrichtung 14 findet also nicht statt. In diesem Antriebsmodus erfolgt die Drehzahlanpassung während der Kurvenfahrt wie bei dem Ausführungsbeispiel gemäß Figur 1.

Ein Antrieb über das Stirnradgetriebe 63 erfolgt, wenn
a) der Hydraulikmotor 68 drucklos ist und somit die Innen- und die Außenlamellen 70 und 72 keine kraftschlüssige Verbindung zwischen der ersten Antriebswelle 26 und der Antriebseinheit 42 herstellen, und
b) die Anpreßplatte 78 mittels des Stellmotors 76 zu dem zweiten Stirnrad 66 gedrängt wird, so daß diese mit dem zweiten Abschnitt 90 der zweiten Antriebswelle 28 in kraftschlüssige Verbindung gerät.

In diesem Antriebszustand ist die Antriebseinheit 42 nicht mit der ersten Antriebswelle 26 verbunden und die Abtriebseinheit 44 ist von dem zweiten Abschnitt 90 der zweiten Antriebswelle 28 getrennt. Da hingegen das zweite Stirnrad 66 in drehfester Verbindung zu dem zweiten Abschnitt 90 steht und das erste Stirnrad 64 ohnehin starr auf der ersten Antriebswelle 26 sitzt, erfolgt der Antrieb über das Stirnradgetriebe 63.

Die Wahl zwischen dem Zugmittelgetriebe 34 und dem Stirnradgetriebe 63 kann entweder automatisch seitens der Regelvorrichtung 36 oder manuell erfolgen.

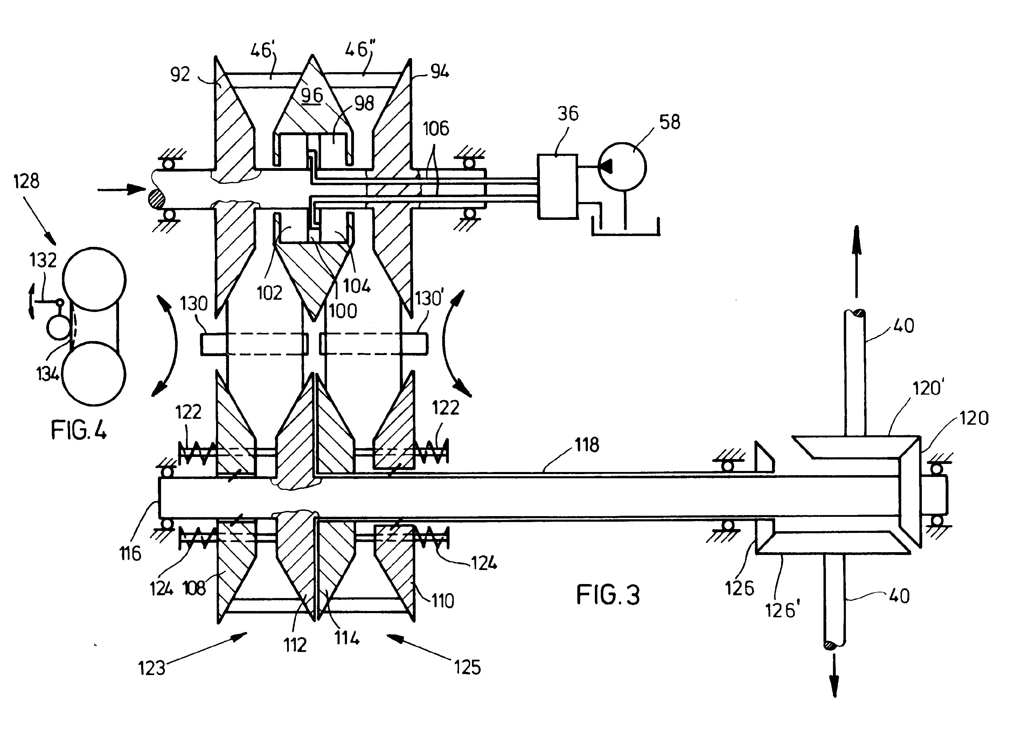

Die Ausführungsbeispiele nach Figur 3 und Figur 4 gehen wieder von einem Zugmittelgetriebe 34′ aus, das stets mit den beiden Antriebswellen 26, 28 verbunden ist. Allerdings ist es auch denkbar, dieses Zugmittelgetriebe 34′ mittels einer nicht gezeigten Kupplung von der ersten Antriebswelle 26 zu trennen, oder es mittels eines Stirnradgetriebes oder einem anderen Getriebe zu überbrücken.

Das Zugmittelgetriebe 34′ setzt sich wiederum aus einer Antriebseinheit 42′ und einer Abtriebseinheit 44′ zusammen, die jeweils auf der ersten, bzw. auf der zweiten Antriebswelle 26 bzw. 28 angeordnet sind. Allerdings enthalten die Antriebs- wie die Abtriebseinheit 42′, 44′ mehr als zwei Regelscheiben 48.

Die Antriebseinheit 42′ enthält eine erste und eine zweite drehfeste und axial starre Regelscheibe 92 und 94 und eine mittlere, axial bewegliche Regelscheibe 96, wobei zwischen jeder starren Regelscheibe 92, 94 und der beweglichen Regelscheibe 96 ein Zugmittel 46′ erfaßt wird.

Die mittlere Regelscheibe 96, die tangential festgesetzt sein kann, enthält einen Druckraum 98, in dem ein auf der ersten Antriebswelle 26 befestigter Ringkolben 100 dichtend geführt ist. Der Druckraum 98 wird von dem Ringkolben 100 normalerweise in eine erste und eine zweite Kammer 102 und 104 unterteilt, die abhängig von einem Ausgangssignal der Regelvorrichtung 36 von der Pumpe 58 über im Innern der ersten Antriebswelle 26 gebildete Kanäle 106 mit Drucköl beschickt werden können. Wird beispielsweise die erste Kammer 102 mit Drucköl beaufschlagt, bewegt sich die mittlere Regelscheibe 96 mit Blick auf Figur 3 nach links und zieht dabei das Zugmittel 46 radial nach außen.

Die Abtriebseinheit 44′ setzt sich aus einer ersten und einer zweiten beweglichen Regelscheibe 108 und 110 und einer ersten und einer zweiten axial, wie auch tangential festen Regelscheibe 112 und 114 zusammen, die jeweils zwischen sich ein Zugmittel 46′ kraftschlüssig aufnehmen.

Die zweite Antriebswelle 28′ setzt sich aus einer ersten Welle 116 und einer zweiten Welle 118 zusammen, die zueinander koaxial angeordnet sind und sich größtenteils überdecken, wobei die erste Welle 116 länger ist als die zweite 118.

Die Welle 116 ist an ihrem den vorderen Rädern 22 zugelegenen Endbereich mit einem Kegelrad 120 versehen, das mit einem weiteren Kegelrad 120′ einer der vorderen Halbwellen 40 kämmt. In ihrem rückwärtigen Endbereich ist sie starr mit der ersten festen Regelscheibe 112 verbunden, während sich die erste bewegliche Regelscheibe 108 auf ihr axial bewegen kann. Die erste bewegliche und die erste feste Regelscheibe 108 und 112 stehen über Stehbolzen 122 in drehfester Verbindung miteinander und werden mittels die Stehbolzen 122 umgebender Federn 124 aufeinander zubewegt, um das zwischen ihnen aufgenommene Zugmittel 46′ sicher ergreifen zu können. Anstatt der vielen Einzelfedern 124 könnte auch eine kräftige Feder gemäß Figur 1 verwendet werden.

Die zweite Welle 118 ist ebenfalls in ihrem den vorderen Rädern 22 zugelegenen Endbereich mit einem Kegelrad 126 versehen, das in Eingriff steht mit einem Kegelrad 126′ auf der anderen vorderen Halbwelle 40, während in seinem rückwärtigen Endbereich die zweite feste und die zweite bewegliche Regelscheibe 114 und 110 vorgesehen sind. Die zweite bewegliche und die zweite feste Regelscheibe 110, 114 stehen ebenfalls wieder über Stehbolzen 122 und Federn 124 in drehfester Verbindung miteinander und nehmen zwischen sich das andere Zugmittel 46˝ rutschfest auf.

Der bisherigen Beschreibung zufolge ist sowohl für das linke, als auch das rechte vordere Rad 22 ein unabhängiges Teilgetriebe 123, 125 geschaffen worden. Demnach enthält das Teilgetriebe 123 für das linke Rad 22 die erste Regelscheibe 92, die mittlere Regelscheibe 96, das zwischen ihnen gehaltene Zugmittel 46′ und die erste bewegliche und die erste feste Regelscheibe 108, 112, die auf die Welle 116, die Kegelräder 120, 120′ und die linke Halbwelle 40 wirken. Das Teilgetriebe 125 für das rechte vordere Rad 22 enthält die zweite Regelscheibe 94, die mittlere Regelscheibe 96, das zwischen ihnen gehaltene Zugmittel 46˝ und die zweite bewegliche und die zweite feste Regelscheibe 110, 114, die auf die zweite Welle 118, die Kegelräder 126, 126′ und die rechte Halbwelle 40 wirken.

Das Verhältnis der Drehzahlen zwischen dem rechten und dem linken vorderen Rad 22 hängt ab von der Stellung der mittleren Regelscheibe 96. Steht die mittlere Regelscheibe 96 derart, daß beide Zugmittel 46′ und 46˝ die gleiche radiale Stellung einnehmen, sind die Drehzahlen an beiden vorderen Rädern 22 gleich. Wird die mittlere Regelscheibe 96 axial bewegt, nimmt die Drehzahl an dem einen Rad 22 im gleichen Verhältnis zu, wie sie an dem anderen Rad 22 abnimmt. Auf diese Weise kann während der Kurvenfahrt mittels der Regelvorrichtung 36 die Geschwindigkeit des kurveninneren Rades 22 geringer sein als die des kurvenäußeren Rades 22, was den tatsächlichen Erfordernissen aufgrund der unterschiedlichen Wenderadien entspricht, so daß es zu keiner Verspannung zwischen beiden vorderen Rädern 22 kommt und das vordere Differential 38 entfallen kann, das beim Auftreten unterschiedlicher Haftungsbedingungen an beiden Rädern 22 ohnehin mit den bekannten Problemen behaftet ist.

Zum Erreichen des an den vorderen Rädern 22 gegenüber den rückwärtigen Rädern 18 während der Kurvenfahrt darüberhinaus erforderlichen Vorlaufs, ist eine Spanneinrichtung 128 vorgesehen, die eine Änderung des Übersetzungsverhältnisses zwischen der ersten Antriebswelle 26 und der ersten Welle 116 bzw. der zweiten Welle 118 bewirken kann.

Diese Spanneinrichtung 128 besteht, wie dies aus der Ansicht nach Figur 4 zu erkennen ist, aus zwei voneinander unabhängigen Spannrollen 130, 130′, die über einen mittels der Regelvorrichtung 36 steuerbaren Winkelhebel 132 an jeweils eines der Trums 134 der Zugmittel 46′, 46˝ angedrückt werden können und diese in den Spalt zwischen den federbelasteten ersten und zweiten beweglichen bzw. festen Regelscheiben 108, 110, 112, 114 hineinziehen, so daß sich der relativen Drehzahländerung zwischen den beiden vorderen Rädern 22 eine generelle Drehzahländerung zwischen den beiden Radpaaren 16 und 18 überlagert. Zur Bewegung der Winkelhebel 132 finden nicht gezeigte elektrische oder hydraulische Stellmotoren Verwendung.

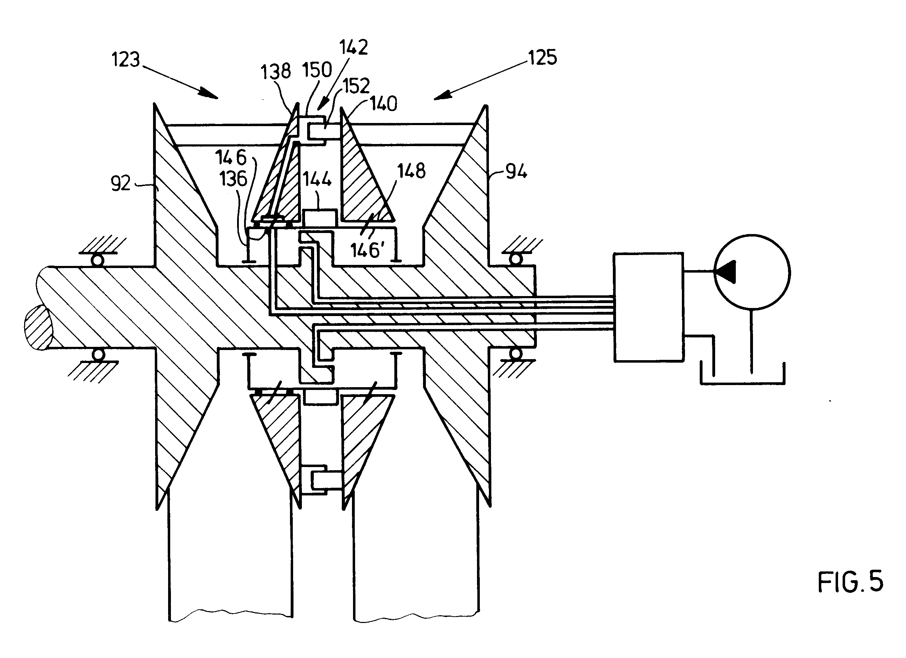

Das Ausführungsbeispiel nach Figur 5 geht von dem Prinzip gemäß Figur 4 aus und unterscheidet sich von der dort offenbarten Lösung dadurch, daß die Spanneinrichtung 128 entfallen ist und dafür die mittlere Regelscheibe 96 geteilt ausgebildet ist.

Die mittlere Regelscheibe 96′ setzt sich zusammen aus einem Träger 136, einer ersten und einer zweiten Konusscheibe 138 und 140 und einem Hydraulikmotor 142.

Der Träger 136 ist wiederum mit dem Druckraum 102, der ersten und der zweiten Kammer 102, 104 versehen, die in bzw. zwischen sich den Ringkolben 100 aufnehmen. Dementsprechend kann der Träger 136 genauso wie die mittlere Regelscheibe 96 aus Figur 4 in beide Richtungen axial verschoben werden. Auf der Umfangsfläche ist axial mittig ein Ring 144 unverrückbar befestigt, der einen Mindestabstand zwischen den beiden Konusscheiben 138, 140 gewährt und der Mindestbautiefe des Hydraulikmotors 142 entspricht. Die seitlich des Rings 144 bis zum axialen Ende des Trägers 136 gelegenen Abschnitte 146, 146′ sind mit einer nicht näher gezeigten Außenverzahnung versehen.

Die Konusscheiben 138, 140 weisen eine zentrale Bohrung 148 mit einer Innenverzahnung auf, die es ermöglicht, die Konusscheiben 138, 140 auf den Träger 136 in den Abschnitten 146, 146′ aufzustecken, bis sie an dem Ring 144 zur Anlage kommen. Dort sind sie drehfest, aber axial verschiebbar gegenüber dem Träger 136 gehalten. Der Außendurchmesser und die Neigung der Innenflächen der Konusscheiben 138, 140 entsprechen denen der festen Regelscheiben 92, 94 und ihre axiale Erstreckung entspricht der der Abschnitte 146, 146′. Wenn die Konusscheiben 138, 140 auch nahezu identisch ausgebildet sind, so sind sie, wie aus Figur 5 hervorgeht, aber spiegelbildlich zueinander auf dem Träger 136 angeordnet.

Der Hydraulikmotor 142 besteht wieder aus einem Zylinder 150 und einem Kolben 152, wobei der Zylinder 150 an der einen Konusscheibe 138 - in diesem Ausführungsbeispiel an der linken - und der Kolben 152 an der anderen Konusscheibe 140, jeweils an der radial verlaufenden Fläche angebracht ist. Die Druckmittelzufuhr zu dem Zylinder 150 erfolgt ebenfalls gesteuert von der Regelvorrichtung 36 aus durch Kanäle im Innern der ersten Antriebswelle 26, durch den Druckraum 98 und durch die erste Konusscheibe 138.

Mit Blick auf Figur 5 ist ersichtlich, daß bei einer Druckbeaufschlagung des Zylinders 150 der Kolben 152 herausgeschoben wird und die beiden Konusscheiben 138, 140 auseinanderschiebt. Diese Relativbewegung zwischen den beiden Konusscheiben 138, 140 erfolgt symmetrisch und beeinflußt die relative Stellung des Trägers 136 mit den beiden Konusscheiben 138, 140 gegenüber den festen Regelscheiben 92, 94 nicht. Es werden lediglich die beiden Zugmittel 46′, 46˝ radial weiter nach außen geschoben, was in einer Übersetzungsänderung ins Schnelle resultiert, die aber für beide vordere Räder 22 im gleichen Maß und unabhängig von der Stellung des Trägers 136 erfolgt.

Im Falle einer Kurvenfahrt wird analog der Funktion des Ausführungsbeispiels aus Figur 4, der Träger 136 gemeinsam mit den beiden Konusscheiben 138, 140 und dem Hydraulikmotor 142 in die eine oder die andere Richtung geschoben, um die Drehzahlen der vorderen Räder 22 dem Wenderadius anzupassen.

## Patentansprüche

1. Antriebsvorrichtung (14) für mindestens zwei Radpaare (16, 20), mit einem Getriebe (24), mit Antriebswellen (26, 28, 88, 90, 116, 118) zwischen diesem und den Radpaaren (16, 20) und mit einem geschwindigkeitsvariablen Zugmittelgetriebe (34, 34′) zum Verändern der relativen Drehzahl zwischen den Antriebswellen (26 - 28, 26 - 88, 90, 26 - 116, 118), dadurch gekennzeichnet, daß eine der Antriebswellen (26) mittels einer drehfesten Verbindung auf eines der Radpaare (16) wirkt, und daß das geschwindigkeitsvariable Zugmittelgetriebe (34, 34′) zwischen der eingangsseitigen, mit einen Radpaar (16) in drehfester Verbindung stehenden Antriebswelle (26) und der ausgangsseitigen Antriebswelle (28, 88, 90, 116, 118) für das andere Radpaar (20) vorgesehen ist.

2. Antriebsvorrichtung nach Anspruch 1, dadurch gekennzeichnet, daß das geschwindigkeitsvariable Zugmittelgetriebe (34, 34′) von der direkt antreibenden Antriebswelle (26) trennbar ist.

3. Antriebsvorrichtung nach Anspruch 1 oder 2, dadurch gekennzeichnet, daß das geschwindigkeitsvariable Zugmittelgetriebe (34) von der angetriebenene Antriebswelle (28, 88, 90) trennbar ist.

4. Antriebsvorrichtung nach einem der Ansprüche 1 bis 3, dadurch gekennzeichnet, daß die Geschwindigkeitsänderung in direkter Abhängigkeit zu der Größe des Lenkwinkels der lenkbaren Räder (22) steht.

5. Antriebsvorrichtung nach einem oder mehreren der vorherigen Ansprüche, dadurch gekennzeichnet, daß das Maß der Geschwindigkeitsänderung über einen Korrekturkreis beeinflußbar ist.

6. Antriebsvorrichtung nach einem oder mehreren der vorherigen Ansprüche, dadurch gekennzeichnet, daß zu den mit änderbarer Geschwindigkeit antreibbaren Rädern (22) getrennte Wellen (116, 118) führen und, daß das geschwindigkeitsvariable Zugmittelgetriebe (34′) aus zwei Teilgetrieben (123, 125) besteht, die auf jeweils eine der Wellen (116, 118) wirken.

7. Antriebsvorrichtung nach einem oder mehreren der vorherigen Ansprüche, dadurch gekennzeichnet, daß das variable Zugmittelgetriebe (34, 34′) als ein Kettengetriebe ausgebildet ist.

8. Antriebsvorrichtung nach Anspruch 6, dadurch gekennzeichnet, daß der Drehzahländerung zwischen den Wellen (116, 118) die Drehzahländerung zwischen den Radpaaren (16, 20) überlagerbar ist.

9. Antriebsvorrichtung nach Anspruch 6, dadurch gekennzeichnet, daß eine beiden Teilgetrieben (123, 125) gemeinsame Regelscheibe (96) des Zugmittelgetriebes (34′) geteilt ist und zwei Konusscheiben (138, 140) enthält, die gegeneinander axial beweglich sind.

10. Antriebsvorrichtung nach einem oder mehreren der vorherigen Ansprüche, dadurch gekennzeichnet, daß die Spannung des oder der Zugmittel(s) (46′, 46˝) des Zugmittelgetriebes (34′) in Abhängigkeit von dem Lenkwinkel über eine Spanneinrichtung (128) veränderbar ist.

11. Antriebsvorrichtung nach Anspruch 6, dadurch gekennzeichnet, daß die Wellen (116, 118) konzentrisch zueinander angeordnet sind.

## Claims

1. Driving arrangement (14) for at least two pairs of wheels (16, 20), with a gear mechanism (24), with drive shafts (26, 28, 88, 90, 116, 118) between the latter and the pairs of wheels (16, 20) and with a variable-speed traction gear mechanism (34, 34′) for varying the relative speed between the drive shafts (26-28, 26-88, 90, 26-116, 118), characterised in that one of the drive shafts (26) acts by means of a non-rotatable connection on one of the pairs of wheels (16), and in that the variable-speed traction gear mechanism (34, 34′) is provided between the drive shaft (26) on the input side, which is non-rotatably connected to one pair of wheels (16), and the drive shaft (28, 88, 90, 116, 118) on the output side for the other pair of wheels (20).

2. Driving arrangement according to claim 1, characterised in that the variable-speed traction gear mechanism (34, 34′) can be disconnected from the directly driving drive shaft (26).

3. Driving arrangement according to claim 1 or 2, characterised in that the variable-speed traction gear mechanism (34) can be disconnected from the driven drive shaft (28, 88, 90).

4. Driving arrangement according to any of claims 1 to 3, characterised in that the speed variation is directly dependent on the quantity of the steering angle of the steerable wheels (22).

5. Driving arrangement according to one or more of the preceding claims, characterised in that the quantity of speed variation can be controlled by a correction circuit.

6. Driving arrangement according to one or more of the preceding claims, characterised in that separate shafts (116, 118) lead to the wheels (22) which can be driven at variable speed, and in that the variable-speed traction gear mechanism (34′) consists of two partial gears (123, 125) which each act on one of the shafts (116, 118).

7. Driving arrangement according to one or more of the preceding claims, characterised in that the variable traction gear mechanism (34, 34′) is constructed as a chain and sprocket drive.

8. Driving arrangement according to claim 6, characterised in that the speed variation between the pairs of wheels (16, 20) can be superimposed on the speed variation between the shafts (116, 118).

9. Driving arrangement according to claim 6, characterised in that a variable-speed pulley (96) of the traction gear mechanism (34′), which pulley is common to both partial gears (123, 125), is split and contains two cone wheels (138, 140) which are axially movable towards each other.

10. Driving arrangement according to one or more of the preceding claims, characterised in that the tension of the traction means (46′, 46˝) of the traction gear mechanism (34′) is variable as a function of the steering angle by a tensioning device (128).

11. Driving arrangement according to claim 6, characterised in that the shafts (116, 118) are arranged concentrically to each other.

## Revendications

1. Ensemble de transmission (14) pour au moins deux paires de roues (16, 20), avec une boîte de vitesses (24), avec des arbres de transmission (26, 28, 88, 90, 116, 118) entre cette dernière et les paires de roues (16, 20), et avec un mécanisme de transmission à moyen de traction (34, 34′) à vitesse variable, pour modifier la vitesse de rotation relative entre les arbres de transmission (26 - 28, 26 - 88, 90, 26 - 116, 118), **caractérisé** en ce qu'un des arbres de transmission (26) agit au moyen d'une liaison solidaire en rotation sur une première paire de roues (16), et en ce que le mécanisme de transmission à moyen de traction (34, 34′) à vitesse variable est prévu entre l'arbre de transmission d'entrée (26), relié solidairement en rotation à la première paire de roues (16), et l'arbre de transmission de sortie (28, 88, 90, 116, 118) pour l'autre paire de roues (20).

2. Ensemble de transmission selon la revendication 1, **caractérisé** en ce que le mécanisme de transmission à moyen de traction (34, 34′) à vitesse variable peut être séparé de l'arbre de transmission directement menant (26).

3. Ensemble de transmission selon la revendication 1 ou 2, **caractérisé** en ce que le mécanisme de transmission à moyen de traction (34) à vitesse variable peut être séparé de l'arbre de transmission mené (28, 88, 90).

4. Ensemble de transmission selon l'une des revendications 1 à 3, **caractérisé** en ce que la modification de la vitesse est en relation directe avec la valeur de l'angle de direction des roues directrices (22).

5. Ensemble de transmission selon une ou plusieurs des revendications précédentes, **caractérisé** en ce qu'on peut agir sur la valeur de la modification de vitesse au moyen d'un cercle de correction.

6. Ensemble de transmission selon une ou plusieurs des revendications précédentes, **caractérisé** en ce que des arbres distincts (116, 118) mènent aux roues (22) pouvant être entraînées à vitesse variable, et en ce que le mécanisme de transmission à moyen de traction (34′) à vitesse variable est constitué de deux mécanismes de transmission partiels (123, 125), qui agissent chacun sur un des arbres (116, 118).

7. Ensemble de transmission selon une ou plusieurs des revendications précédentes, **caractérisé** en ce que le mécanisme de transmission à moyen de traction (34, 34′) à vitesse variable est un mécanisme à chaîne.

8. Ensemble de transmission selon la revendication 6, **caractérisé** en ce qu'on peut superposer, à la modification de vitesse de rotation entre les arbres (116, 118), la modification de vitesse de rotation entre les paires de roues (16, 20).

9. Ensemble de transmission selon la revendication 6, **caractérisé** en ce qu'un disque de réglage (96), commun aux deux mécanismes de transmission partiels (123, 125), du mécanisme de transmission à moyen de traction (34′) est divisé et contient deux disques coniques (138, 140), qui sont axialement mobiles l'un par rapport à l'autre.

10. Ensemble de transmission selon une ou plusieurs des revendications précédentes, **caractérisé** en ce que la tension du ou des moyens de traction (46′, 46˝) du mécanisme de transmission à moyen de traction (34′) peut être modifiée en fonction de l'angle de direction au moyen d'un mécanisme tendeur ( 128).

11. Ensemble de transmission selon la revendication 6, **caractérisé** en ce que les arbres (116, 118) sont disposés concentriquement l'un par rapport à l'autre.
